# EUROPÄISCHE PATENTANMELDUNG

(11) **EP 1 695 888 A2**
(43) Veröffentlichungstag der Anmeldung: **30.08.2006**
(21) Anmeldenummer: 06101367.8
(22) Anmeldetag: 07.02.2006
(51) Int. Cl.: B60W 30/06, B60W 10/18, B60W 10/20

(54) **Vorrichtung zur semiautonomen Unterstützung des Einparkvorgangs bei Fahrzeugen**

(30) Priorität: 23.02.2005 DE 102005008176
(71) Anmelder: ROBERT BOSCH GMBH, 70442 Stuttgart (DE)
(72) Erfinder: Lee, Wei-Chia, 71229 Leonberg (DE)

(57) **Zusammenfassung**

Es wird eine Vorrichtung zur semiautonomen Unterstützung des Einparkvorgangs bei Fahrzeugen (1, 3, 4) mit einer Einheit zur Ermittlung einer geeigneten Einparkbahn (5), Mittel zur Positionsbestimmung des Fahrzeugs (1) sowie Mittel zur Geschwindigkeitsbestimmung des Fahrzeugs (1) vorgeschlagen. Erfindungsgemäß ist eine Kontrolleinheit vorgesehen, die bei ansonsten manueller Kontrolle der Geschwindigkeit des Fahrzeugs (1) zur Betätigung einer Einrichtung zur automatischen Herabsetzung der Geschwindigkeit des Fahrzeugs (1) während eines Einparkvorgangs ausgelegt ist, falls die Geschwindigkeit des Fahrzeugs (1) bezogen auf wenigstens einen vorgegebenen Parameter zu hoch ist. Außerdem wird vorgeschlagen, dass anstatt oder alternativ zu der Einrichtung zur automatischen Herabsetzung der Geschwindigkeit des Fahrzeugs (1) ein Hinweis an einen Fahrzeuglenker während eines Einparkvorgangs mit dem Ziel ausgegeben wird, den Fahrzeuglenker zu veranlassen, die Geschwindigkeit des Fahrzeugs (1) herabzusetzen.

## Beschreibung

### Stand der Technik

Fahrerassistentsysteme helfen dem Fahrer, die Fahraufgabe ordnungsgemäß zu bewältigen. Seit langem gibt es Systeme, die z.B. in die Bremse und in den Antriebsstrang eingreifen. Beispielhaft kann hierfür das Antiblockiersystem und der Tempomat genannt werden. Durch Einführung einer elektromechanischen Lenkung EPS (Electronic Power Steering) ist es außerdem möglich, haptische Rückmeldungen am Lenkrad durch Überlagerung von Lenkmomenten zu erzeugen und auch automatisch zu lenken.

Bei einem semiautonomen Einparksystem (SPA) kann ein System zuerst die für die erfasste Parklücke optimale Einparkbahn berechnen. Danach übernimmt bei einer Ausführungsform das EPS das Lenken, so dass ein Fahrer nur noch Gas geben und bremsen muss. Bei einem vollautomatischen Einparksystem wird auch das Gas geben und Bremsen vom System übernommen.

### Aufgabe und Vorteile der Erfindung

Der Erfindung liegt die Aufgabe zugrunde, eine Vorrichtung der einleitend bezeichneten Art zur semiautonomen Unterstützung eines Fahrers zur Verfügung zu stellen, die für den Fahrer eine vergleichsweise höhere Bedienerfreundlichkeit besitzt.

Diese Aufgabe wird durch die Merkmale der Ansprüche 1 und 2 gelöst.

In den Unteransprüchen sind vorteilhafte und zweckmäßige Weiterbildungen der Erfindung angegeben.

Die Erfindung geht von einer Vorrichtung zur semiautonomen Unterstützung des Einparkvorgangs bei Fahrzeugen aus, die eine Einheit zur Ermittlung einer geeigneten Einparkbahn, Mittel zur Geschwindigkeitsbestimmung des Fahrzeugs sowie Mittel zur Positionsbestimmung des Fahrzeugs umfasst. Die Mittel zur Positionsbestimmung des Fahrzeugs ermitteln die Position des Fahrzeugs vorzugsweise in Bezug auf eine Einparkbahn und/oder eine Parklückenbegrenzung.

Der Kern der Erfindung liegt nun darin, dass eine Kontrolleinheit vorgesehen ist, die bei ansonsten manueller Kontrolle der Geschwindigkeit eines Fahrzeugs durch einen Fahrzeuglenker zur Betätigung einer Einrichtung zur automatischen Herabsetzung der Geschwindigkeit des Fahrzeugs während eines Einparkvorgangs ausgelegt ist, falls die Geschwindigkeit des Fahrzeugs bezogen auf wenigstens einen vorgegebenen Parameter zu hoch ist. Dieser Vorgehensweise liegt die Erkenntnis zugrunde, dass ein Fahrer, insbesondere wenn beim Einparkvorgang die Lenkung von einer automatischen Lenkeinrichtung übernommen wird, von Fall zu Fall vergisst, dass er zur Kontrollierung der Längsbewegung des Fahrzeuges das Bremspedal zu betätigen hat. Durch die erfindungsgemäße Vorgehensweise greift in einer solchen Situation die Kontrolleinheit ein und setzt die Geschwindigkeit des Fahrzeuges herab.

Bei einer weiteren wesentlichen Variante der Erfindung kann alternativ oder anstatt der Einrichtung zur automatischen Herabsetzung der Geschwindigkeit eines Fahrzeugs durch die Kontrolleinheit auch die Ausgabe eines Hinweises an den Fahrzeuglenker vorgenommen werden, mit der Zielsetzung, den Fahrer zu veranlassen, die Geschwindigkeit des Fahrzeugs während eines Einparkvorganges herabzusetzen.

Die erstgenannte Möglichkeit bietet insbesondere zur Vermeidung von Kollisionen einen sicheren Schutz, da ein Fahrzeug automatisch in Abhängigkeit eines vorgegebenen Parameters zum Stillstand gebracht werden kann.

Vorgegebene Parameter können z.B. Werte sein, die die Position des Fahrzeugs widerspiegeln, beispielsweise der Abstand zu einem angrenzenden Fahrzeug oder die Position in Bezug auf eine berechnete Einparkbahn. Als Parameter kann aber auch einfach eine zulässige Maximalgeschwindigkeit verwendet werden. Außerdem kann als Parameter ein Wert herangezogen werden, der eine vordefmierte, z.B. die maximale Lenkgeschwindigkeit widerspiegelt. Sobald ein solcher Wert von der Kontrolleinheit im letztgenannten Fall in Abhängigkeit von der Position und vorzugsweise der Geschwindigkeit des Fahrzeugs festgestellt wird, kann ein Hinweis an den Fahrzeuglenker erfolgen, die Geschwindigkeit herabzusetzen. Gemäß der erstgenannten Alternative kann auch automatisch Einfluss auf die Geschwindigkeit genommen werden. Dies ist beispielsweise durch Eingriff in die Motorsteuerung und/oder durch automatische Betätigung des Bremssystems möglich.

Bei einer außerdem bevorzugten Ausgestaltung der Erfindung können über Mittel zur automatischen Lenkung Lenkmomente auf ein Lenkrad des Fahrzeugs überlagert werden. Sind die Momente höher als die Reibkräfte zwischen Reifen und Fahrbahn, so lenkt das Fahrzeug automatisch. Bei einem Einparkvorgang übernehmen beispielsweise die Mittel zur automatischen Lenkung die Lenkbewegungen, um das Fahrzeug auf einer vorberechneten Einparktrajektorie in eine Parklücke zu steuern. Die Längsbewegung wird hingegen vom Fahrer bestimmt. Bei einem Standardeinparkvorgang beschleunigt der Fahrer das Fahrzeug derart, dass regelmäßig an einem Umlenkpunkt einer Einparktrajektorie, ungefähr auf der Hälfte der Einparktrajektorie, das Fahrzeug eine vergleichsweise hohe Geschwindigkeit besitzt. Die Kontrolleinheit der erfindungsgemäßen Vorrichtung berechnet vorzugsweise vor dem Erreichen dieses Punktes in Abhängigkeit von der Fahrzeuggeschwindigkeit die benötigte Lenkgeschwindigkeit, die erforderlich ist, um den Umlenkvorgang herbeizuführen. Ist die berechnete Lenkgeschwindigkeit höher als die maximal mögliche Lenkgeschwindigkeit der Mittel zur automatischen Lenkung, wird entweder ein Hinweis an den Fahrer ausgegeben, die Geschwindigkeit herabzusetzen oder die Geschwindigkeit wird über die oben beschriebenen Einrichtungen automatisch reduziert. Der Hinweis an den Fahrer kann z.B. durch einen Warnton, Warnblinker oder eine Sprachausgabe erfolgen. Eine Vielfalt weiterer visueller, akustischer oder haptischer Möglichkeiten, Hinweise für den Fahrer bereitzustellen, sind außerdem denkbar.

Die Geschwindigkeit des Fahrzeugs kann mittels der Abstandsensoren des SPA über die zeitbezogene Veränderung eines Abstands zu einer Parklückenbegrenzung bestimmt werden. Vorzugsweise wird in einer Situation, in welcher die Geschwindigkeit verglichen zum Abstand zu einer Parklückenbegrenzung unter Berücksichtigung der Reaktionszeit eines Fahrers in einem derartigen Bereich liegt, dass eine Kollision mit der Parklückenbegrenzung nicht auszuschließen ist, entweder ein automatischer Bremsvorgang eingeleitet oder ein Hinweis an den Fahrer ausgegeben, die Geschwindigkeit zu reduzieren. Eine Parklückenbegrenzung kann beispielsweise ein Bordstein oder ein angrenzendes Fahrzeug darstellen.

### Zeichnungen

Ein Ausführungsbeispiel der Erfindung ist in der nachfolgenden Zeichnung unter Angabe weiterer Vorteile und Einzelheiten nachstehend näher erläutert.

### Beschreibung des Ausführungsbeispiels

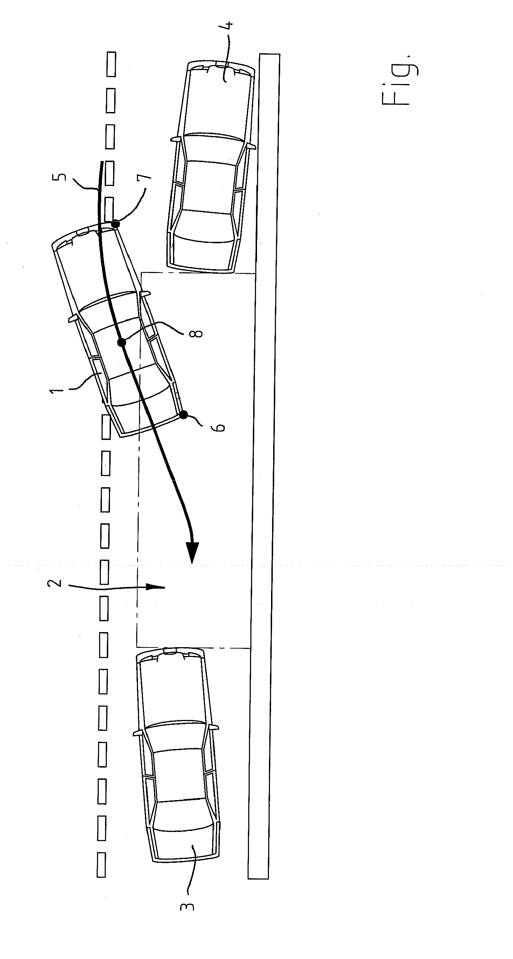

Die Figur zeigt die Situation eines Einparkvorgangs eines PKW 1 in eine Parklücke 2 zwischen zwei parkenden PKWs 3, 4 nachdem eine Vorrichtung zur semiautonomen Unterstützung des Einparkvorgangs beim ersten längsseitigen Vorbeifahren in Vorwärtsrichtung mittels Abstandsensoren 6, 7 die Parklückenlänge berechnet, daraufhin die Parklücke 2 als passende Parklücke eingestuft hat sowie in Abhängigkeit von der Länge der Parklücke 2 eine optimale Einfahrtrajektorie 5 berechnet wurde und der einparkende PKW 1 bereits den halben Weg der Einfahrtrajektorie 5 zurückgelegt hat.

Die Lenkbewegung beim Einparken wird dabei von einer automatischen Lenkeinrichtung vorgenommen, durch welche Lenkmomente auf das Lenkrad überlagert werden. Die Längsbewegung wird von einem Fahrer selbst bestimmt. Gemäß der Figur muss der Fahrer beim Zurückfahren in der dargestellten Position des Fahrzeugs entsprechend der Einfahrtrajektorie einen Umlenkvorgang vornehmen. Außerdem hat das Fahrzeug regelinäßig im Bereich eines Umlenkpunktes 8 eine vergleichsweise hohe Geschwindigkeit.

Eine Kontrolleinheit (nicht dargestellt) der Vorrichtung zur semiautonomen Unterstützung des Einparkvorgangs hat jedoch laufend vor dem Erreichen des Umlenkpunktes 8 in Abhängigkeit von der Geschwindigkeit die benötigte Lenkgeschwindigkeit für die automatische Lenkeinrichtung errechnet. Die benötigte Lenkgeschwindigkeit ergibt sich dabei aus dem erforderlichen Lenkeinschlag an der jeweiligen Position der Einparktrajektorie 5. Hierbei sind Wegepunkten auf der Einparktrajektorie entsprechende Lenkwinkel zugewiesen. Fährt das Fahrzeug die Einparktrajektorie an, so ändert sich der einzuschlagende Lenkwinkel. Unterscheidet sich zwischen zwei Orten auf der Einparktrajektorie der einzuschlagende Lenkwinkel, so ist dieser Lenkwinkel zwischen diesen beiden Orten zu ändern. Wird die Strecke zwischen den beiden Orten schneller durchfahren, so muss auch die Lenkwinkeländerung schneller durchgeführt werden. Die Geschwindigkeit, mit der der Lenkwinkel geändert wird, also die Lenkwinkeländerung pro Zeiteinheit, ist umso höher, je schneller das Fahrzeug die Strecke zwischen den beiden Orten durchfährt.

Eine elektromechanische Lenkung weist beispielsweise eine maximale Lenkwinkeländerung des Fahrzeugs von 25° bis 35° pro Sekunde auf. Die maximale Lenkgeschwindigkeit wird z.B. von der maximalen Stromabnahme des elektrischen Stellmotors der elektromechanischen Lenkung begrenzt. Die maximale Lenkgeschwindigkeit pro Sekunde entspricht z.B. einer etwa eineinhalbfachen Lenkradumdrehung. Im allgemeinen ist die maximale Lenkgeschwindigkeit unabhängig von der Geschwindigkeit des Fahrzeugs. Da die elektromechanische Lenkung im allgemeinen an verschiedene Geschwindigkeitsbereiche angepasst ist, kann dieser Wert für verschiedene Geschwindigkeitsbereiche auch unterschiedlich sein. Bei einem Einparkvorgang ist die Geschwindigkeit jedoch im allgemeinen so niedrig, dass die maximale Lenkgeschwindigkeit als konstant anzusehen ist. Für den Fall, dass bei der Fahrt entlang der vorberechneten Parktrajektorie die elektromechanische Lenkung das Fahrzeug so lenken kann, dass es der Einparktrajektorie folgen kann, ist keine Warnung eines Fahrers erforderlich. Das System kann den Fahrer, ohne dass weitere Eingriffe erforderlich werden, in die Parklücke führen. Für den Fall aber, dass die berechnete Lenkgeschwindigkeit zum Folgen der Einparktrajektorie höher liegt, als die maximal mögliche Lenkgeschwindigkeit der automatischen Lenkeinrichtung erhält der Fahrer durch eine Kommunikationseinrichtung (nicht dargestellt) einen Hinweis, das Fahrzeug abzubremsen. So kann z.B. über einen Lautsprecher eine Warnung "Geschwindigkeit senken" akustisch ausgegeben werden. In einer weiteren Ausführungsform kann auch eine entsprechende Warnung optisch in einer Anzeige dargestellt werden. In einer weiteren Ausführungsform kann das Fahrzeug auch durch eine Triebstrangseingriff und/oder durch eine Bremsvorrichtung automatisch so verzögert werden, dass die automatische Lenkung das Fahrzeug so steuern kann, dass es der Einparktrajektorie folgen kann, indem die Fahrzeuggeschwindigkeit und damit die erforderliche Lenkgeschwindigkeit so gesenkt wird, dass sie unterhalb der maximalen Lenkgeschwindigkeit liegt. Dadurch kann sichergestellt werden, dass die automatische Lenkeinrichtung in der Lage ist, das Fahrzeug auf der berechneten optimalen Einfahrbahn 5 in die Parklücke zu steuern.

In einer weiteren Ausführungsform kann der vorgegebene Parameter, ab dem die Geschwindigkeit des Fahrzeugs während des Einparkvorgangs automatisch herabgesetzt wird bzw. ab dem der Fahrzeuglenker veranlasst wird, die Geschwindigkeit des Fahrzeugs herabzusetzen auch von einer Reichweite von Umfeldsensoren des Fahrzeugs abhängen. Die Reichweite von Umfeldsensoren kann z.B. durch die Witterung, insbesondere durch Regen oder Vereisung der Sensoren, beeinflusst werden. Möglicherweise fährt ein Fahrer bei einer verringerten Reichweite der Sensoren so schnell, dass er vor einem Hindernis bei dem Einparkvorgang nicht mehr rechtzeitig reagieren kann. Wird folglich eine verringerte Reichweite der Sensoren festgestellt, z.B. durch einen Sensor-Selbsttest, so wird gegebenenfalls die Geschwindigkeit bei dem Einparkvorgang verringert bzw. der Fahrer wird zur Verringerung der Fahrzeuggeschwindigkeit aufgefordert.

## Patentansprüche

1. Vorrichtung zur semiautonomen Unterstützung des Einparkvorgangs bei Fahrzeugen (1, 3, 4) mit einer Einheit zur Ermittlung einer geeigneten Einparkbahn (5), Mittel zur Positionsbestimmung des Fahrzeugs (1) sowie Mittel zur Geschwindigkeitsbestimmung des Fahrzeugs (1), **dadurch gekennzeichnet, dass** eine Kontrolleinheit vorgesehen ist, die bei ansonsten manueller Kontrolle der Geschwindigkeit des Fahrzeugs (1) zur Betätigung einer Einrichtung zur automatischen Herabsetzung der Geschwindigkeit des Fahrzeugs während eines Einparkvorgangs ausgelegt ist, falls die Geschwindigkeit des Fahrzeugs (1) bezogen auf wenigstens einen vorgegebenen Parameter zu hoch ist.

2. Vorrichtung nach dem Oberbegriff des Anspruchs 1, insbesondere nach Anspruch 1, **dadurch gekennzeichnet, dass** eine Kontrolleinheit vorgesehen ist, die bei ansonsten manueller Kontrolle der Geschwindigkeit eines Fahrzeugs (1) zur Ausgabe eines Hinweises an einen Fahrzeuglenker während eines Einparkvorganges mit dem Ziel, den Fahrzeuglenker zu veranlassen, die Geschwindigkeit des Fahrzeugs (1) herabzusetzen, ausgelegt ist, falls die Geschwindigkeit des Fahrzeugs (1) bezogen auf wenigstens einen vorgegebenen Parameter zu hoch ist.

3. Vorrichtung nach einem der vorhergehenden Ansprüche, **dadurch gekennzeichnet, dass** der wenigstens eine vorgegebene Parameter ein Wert ist, der die Position eines Fahrzeugs (1) widerspiegelt.

4. Vorrichtung nach einem der vorhergehenden Ansprüche, **dadurch gekennzeichnet, dass** Mittel zur automatischen Lenkung vorgesehen sind.

5. Vorrichtung nach einem der vorhergehenden Ansprüche, **dadurch gekennzeichnet, dass** die Kontrolleinheit dazu ausgelegt ist, in Abhängigkeit von der Position und vorzugsweise der Geschwindigkeit eines Fahrzeugs (1) einen Wert zu berechnen, der die erforderliche Lenkgeschwindigkeit widerspiegelt.

6. Vorrichtung nach einem der vorhergehenden Ansprüche, **dadurch gekennzeichnet, dass** die Kontrolleinheit zur Berechnung eines Wertes, der die erforderliche Lenkgeschwindigkeit widerspiegelt, im Bereich eines Umlenkpunktes einer ermittelten Einparkbahn (5) und vorzugsweise in Abhängigkeit von der Geschwindigkeit ausgebildet ist.

7. Vorrichtung nach einem der vorhergehenden Ansprüche, **dadurch gekennzeichnet, dass** der wenigstens eine vorgegebene Parameter ein Wert ist, der eine vordefinierte, insbesondere maximale Lenkgeschwindigkeit widerspiegelt.
